Europäisches Patentamt

European Patent Office

Office européen des brevets

(19)

(11)  EP 1 138 976 B1

(12)  EUROPEAN PATENT SPECIFICATION

(45) Date of publication and mention
of the grant of the patent:
26.10.2005  Bulletin 2005/43

(51) Int Cl.⁷: **F16G 5/16**

(21) Application number: 01107929.0

(22) Date of filing: 28.03.2001

(54) **Process for combining metal elements in belt for continuously variable transmission and belt**

Verfahren zum Zusammenfügen von Metallelementen in einem Riemen für stufenloses, regelbares Getriebe und Riemen

Procédé pour combiner des éléments métalliques dans une courroie pour transmission continûment variable et courroie

(84) Designated Contracting States:
DE NL

(30) Priority: 29.03.2000 JP 2000090203

(43) Date of publication of application:
04.10.2001  Bulletin 2001/40

(73) Proprietor: HONDA GIKEN KOGYO KABUSHIKI
KAISHA
Tokyo (JP)

(72) Inventor: Ohnuki, Motonori,
K.K. Honda Gijutsu Kenkyusho
Wako-shi, Saitama (JP)

(74) Representative: Prechtel, Jörg et al
Weickmann & Weickmann
Patentanwälte
Postfach 86 08 20
81635 München (DE)

(56) References cited:
EP-A- 0 305 023

**Description**

The present invention relates to a process for combining metal elements in a belt for a continuously variable transmission, the belt including a metal ring assembly constructed from a plurality of endless metal rings laminated one on another, and a large number of metal elements supported in a laminated state on the metal ring assembly, and the belt being wound around a drive pulley and a driven pulley to transmit a driving force between both of the pulleys, and a belt for a continuously variable transmission.

There is a belt for a continuously variable transmission known from Japanese Patent No. 2,532,253 (EP-A-0 305 023), which is constructed by preparing a plurality of types of metal elements with different thickness, and combining the plurality of types of metal elements at a predetermined number ratio at random, whereby a noise is reduced during operation of the belt.

Such metal element of the belt for the continuously variable transmission is produced by fine blanking of a metal plate, but the thickness of the metal element, particularly, the thickness of the left and right pulley abutment faces of the metal elements differs in each lot of products. Specifically, a common feature exists in differences in thickness between the left and right pulley abutment faces of the metal elements in the same lot. In each lot, the left pulley abutment face of the metal element is thicker than the right abutment face, or the right pulley abutment face is thicker than the left pulley abutment face.

When the pulley abutment faces of the metal element are in engagement with V-faces of the drive pulley or the driven pulley, front and rear edges of the pulley abutment faces of such metal element may be brought into edge contact with the V-faces of the pulley upon yawing of such metal element, whereby an abnormal wear may occur in the V-faces of the pulley to exert an adverse influence to the shifting characteristic and the durability.

In a case where all of the large number of the metal elements included in the metal belt are formed from the same lot, when the large number of metal elements are brought into close contact with one another under the action of a strong urging force, differences in thickness between the left and right pulley abutment faces of the respective metal elements are accumulated. For this reason, there is a possibility that the metal elements are yawed largely, whereby the edge contacts occur in their portions wound around the pulley.

Such disadvantage is solved by selecting and using only the metal elements having a smaller difference in thickness between the left and right pulley abutment faces. In such a case, however, there is a problem that the yield of the metal elements is reduced to cause an increase in cost.

The present invention has been accomplished with the above circumstance in view, and it is an object of the present invention to ensure that even if metal elements having a difference in thickness between left and right pulley abutment faces are used, an edge contact does not occur between V-faces of a pulley and the metal elements.

To achieve the above object, according to a first characteristic of the present invention, there is proposed a process for combining metal elements in a belt for a continuously variable transmission, the belt including a metal ring assembly constructed from a plurality of endless metal rings laminated one on another, and a large number of metal elements supported in a laminated state on the metal ring assembly, and being wound around a drive pulley and a driven pulley to transmit a driving force between both of the pulleys, the process comprising a step of measuring a thickness of each of left and right pulley abutment faces of the metal elements, a step of selecting a predetermined number of the metal elements so that the total sum of differences in thickness of the left and right pulley abutment faces of the predetermined number of the metal elements is in a predetermined range, and a step of combining the selected metal elements at random and assembling them to the metal ring assembly.

With the above characteristic, the thickness of the left and right pulley abutment faces of each of the metal elements are measured; and the predetermined number of the metal elements are selected so that the total sum of the differences in thickness between the left and right pulley abutment faces of the predetermined number of the metal elements is in the predetermined range; and these metal elements are combined at random and assembled to the metal ring assembly. Therefore, even if the metal elements receiving a strong urging force in the vicinity of the exit of the drive pulley are yawed, the pulley abutment faces of such metal elements are prevented from being brought into edge contact with V-faces of the drive pulley. Thus, it is possible to use the metal elements having a difference in thickness between the left and right pulley abutment faces, while preventing the damage to the V-faces of the drive pulley to provide an enhancement in durability, and to increase the yield of the metal elements to provide a reduction in cost.

According to a second characteristic of the present invention, in addition to the first characteristic, there is provided a process for combining metal elements in a belt for a continuously variable transmission, wherein the predetermined number is the number of the metal elements to which an urging force is applied within the drive pulley.

With the second characteristic, for the predetermined number of the metal elements to which urging force is applied within the drive pulley, the total sum of the differences in thickness between the left and right pulley abutment faces is set to be in a predetermined range. Therefore, the pulley abutment faces are prevented further reliably from being brought into edge contact with the V-faces of the drive pulley.

According to a third characteristic of the present invention, the predetermined number corresponds to about 5 to 15%, preferably about 10% of the total number of metal elements of the belt.

According to a fourth characteristic of the present invention, there is provided a belt for a continuously variable transmission, which includes a metal ring assembly (31) constructed from a plurality of endless metal rings (33) laminated one on another, and a large number of metal elements (32) supported in a laminated state on the metal ring assembly (31), and which is wound around a drive pulley (6) and a driven pulley (11) to transmit a driving force between both of the pulleys (6 and 11), wherein, within a predetermined number of adjacent metal elements (32) which predetermined number is smaller than the total number of metal elements (32) within the belt, the total sum of differences in thickness (ta, tb) between left and right pulley abutment faces (39) of these adjacent metal elements (32) is in a predetermined range,wherein the individual metal elements (32) having a different thickness of this predetermined number of metal elements are distributed at random in longitudinal direction of the belt.

The mode for carrying out the present invention will now be described by way of an embodiment shown in the accompanying drawings.

Fig. 1 is a skeleton illustration of a power transmitting system in a vehicle having a continuously variable transmission mounted thereon.

Fig. 2 is a perspective view of a portion of a metal belt.

Fig. 3 is a view showing metal elements in the vicinity of an exit of a drive pulley in a lined-up state.

Figs. 4A and 4B are diagrams showing a distribution of urging forces between metal elements of a metal belt wound around a drive pulley and a driven pulley.

Fig. 5 is a graph showing the relationship between the total difference in thickness between pulley abutment faces of the metal elements and the wear amount of V-faces of the drive pulley.

Fig. 6 is a diagrammatic partial front view of the drive pulley and the metal element.

Fig. 7 is a sectional view taken along a line 7-7 in Fig. 6.

Fig. 8 is a diagram showing the combination of metal elements from two lots in a state in which the edge contact is avoided.

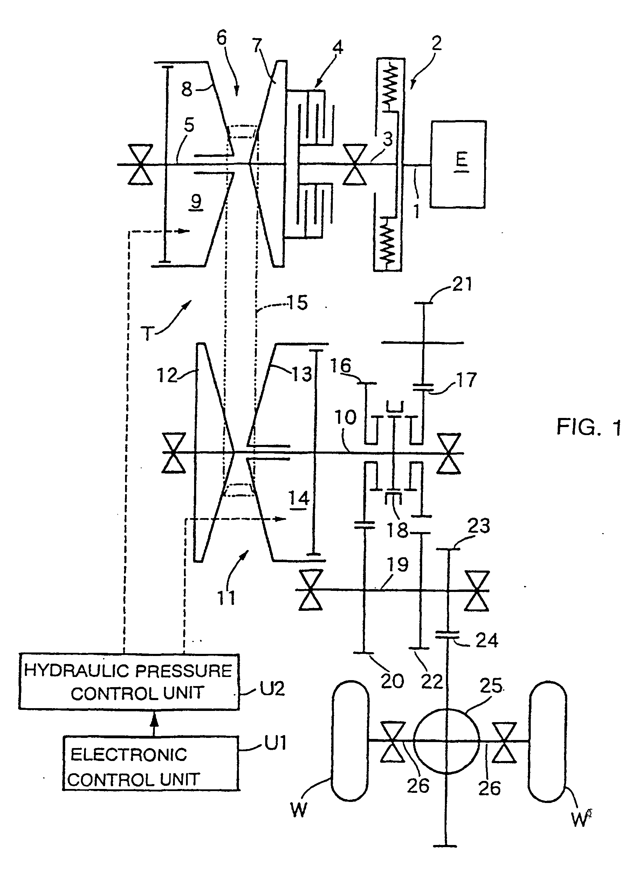

Figs. 1 to 8 show an embodiment of the present invention.

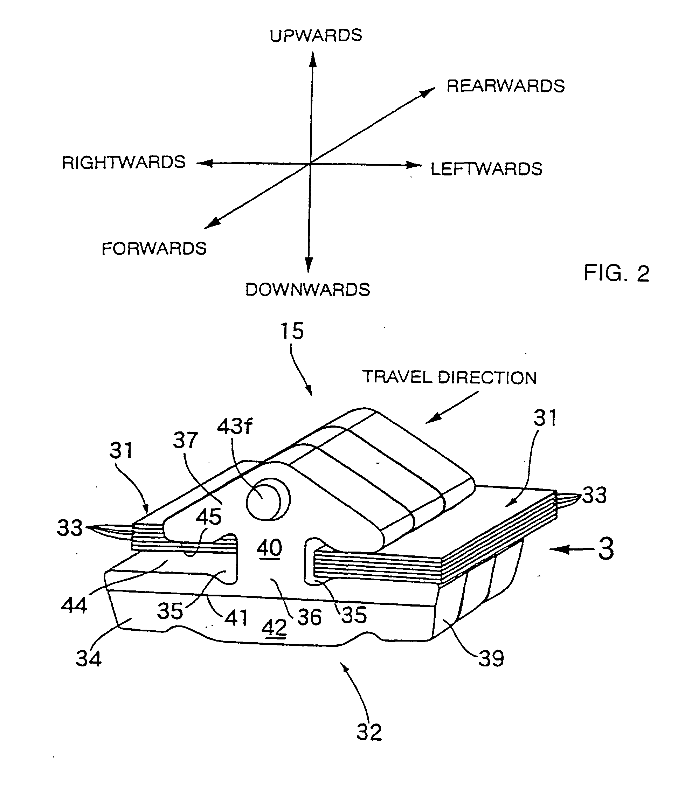

The definitions of forward and backward directions, right and left directions, and radial directions of a metal element used in the present embodiment are shown in Fig. 2. The radial direction is defined as a radial direction of a pulley against which the metal element abuts. A direction toward the axis of rotation of the pulley is a radially inner direction, and a direction away from the axis of revolution of the pulley is a radially outward direction. The right and left directions are defined as directions along the axis of rotation of the pulley against which the metal element abuts. The forward and backward directions are defined as directions along the direction of travel of the metal elements during forward traveling of a vehicle.

Fig. 1 schematically shows the structure of a metal belt type continuously variable transmission T mounted in an automobile. An input shaft 3 connected to a crankshaft 1 of an engine E through a damper 2 is connected to a drive shaft 5 of the metal belt type continuously variable transmission T through a start clutch 4. A drive pulley (DR pulley) 6 provided on the drive shaft 5 includes a stationary pulley half 7 secured to the drive shaft 5, and a movable pulley half 8 which can be moved toward and away from the stationary pulley half 7. The movable pulley half 8 is forced toward the stationary pulley half 7 by a hydraulic pressure applied to an oil chamber 9.

A driven pulley (DN pulley) 11 is provided on a driven shaft 10 disposed in parallel to the drive shaft 5, and includes a stationary pulley half 12 secured to the driven shaft 10, and a movable pulley half 13 which can be moved toward and away from the stationary pulley half 12. The movable pulley half 13 is forced toward the stationary pulley half 12 by a hydraulic pressure applied to an oil chamber 14. A metal belt 15 is wound around the drive pulley 6 and the driven pulley 11 (see Fig. 2). The metal belt 15 comprises a large number of metal elements 32 supported on a pair of left and right metal ring assemblies 31, 31. Each of the metal ring assemblies 31 comprises twelve metal rings 33 which are laminated on one another.

A forward drive gear 16 and a backward drive gear 17 are relatively rotatably supported on the driven shaft 10. The forward and backward drive gears 16 and 17 can be coupled selectively to the driven shaft 10 by a selector 18. A forward driven gear 20 meshed with the forward drive gear 16 and a backward driven gear 22 meshed with the backward drive gear 17 through a backward idling gear 21 are secured to an output shaft 19 which is disposed in parallel to the driven shaft 10.

The rotation of the output shaft 19 is input to a differential 25 through a final drive gear 23 and a final driven gear 24, and is transmitted therefrom through left and right axles 26, 26 to driven wheels W, W.

A driving force of the engine E is transmitted to the driven shaft 10 through the crankshaft 1, the damper 2, the input shaft 3, the start clutch 4, the drive shaft 5, the drive pulley 6, the metal belt 15 and the driven pulley 11. When a forward travel range is selected, the driving force of the driven shaft 10 is transmitted to the output shaft 19 through the forward drive gear 16 and the forward driven gear 20, thereby allowing the vehicle to travel forwards. When a backward travel range is selected, the driving force of the driven shaft 10 is transmitted to the output shaft 19 through the backward drive gear 17, the backward idling gear 21 and the backward driven gear 22, thereby allowing the vehicle to travel backwards.

In this metal belt type continuously variable transmission T, hydraulic pressures applied to the oil chamber 9 of the drive pulley 6 and the oil chamber 14 of the driven pulley 11 are controlled by a hydraulic pressure control unit U2 which is operated by a command from an electronic control unit U1, thereby continuously adjusting the change gear ratio. Specifically, if a hydraulic pressure applied to the oil chamber 14 of the driven pulley 11 is increased relative to a hydraulic pressure applied to the oil chamber 9 of the drive pulley 6, the groove width of the driven pulley 11 is reduced, leading to an increased effective radius, and correspondingly, the groove width of the drive pulley 6 is increased, leading to a reduced effective radius. Therefore, the change gear ratio of the metal belt type continuously variable transmission T is continuously varied toward "LOW". On the other hand, if the hydraulic pressure applied to the oil chamber 9 of the drive pulley 6 is increased relative to the hydraulic pressure applied to the oil chamber 14 of the driven pulley 11, the groove width of the drive pulley 6 is reduced, leading to an increased effective radius, and correspondingly, the groove width of the driven pulley 11 is increased, leading to a reduced effective radius. Therefore, the change gear ratio of the metal belt type continuously variable transmission T is continuously varied toward "TOP".

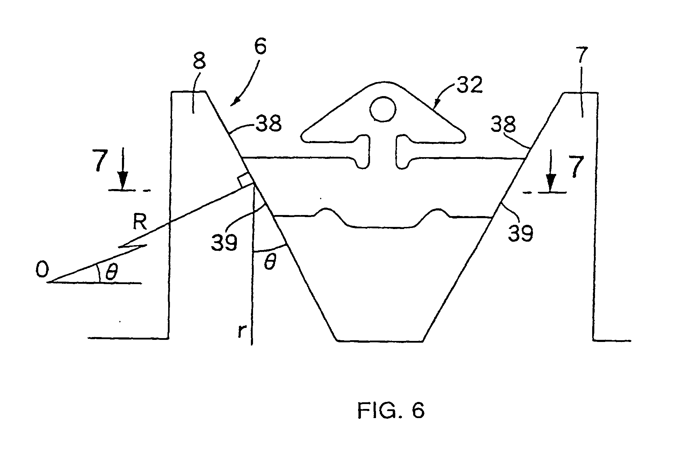

As shown in Fig. 2, each of the metal elements 32 formed from a metal plate by punching or stamping includes a substantially trapezoidal element body 34, a neck 36 located between a pair of left and right ring slots 35, 35 into which the metal ring assemblies 31, 31 are fitted, and a substantially triangular ear 37 connected to an upper portion of the element body 34 through the neck 36. Formed on the laterally opposite ends of the element body 34 is a pair of pulley abutment faces 39, 39 capable of abutting against V-faces 38, 38 (see Fig. 6) of the drive pulley 6 and the driven pulley 11. Formed on the front and rear portions of the metal element 32 is a pair of front and rear main surfaces 40, 40 which are perpendicular to the travel direction and parallel to each other. An inclined face 42 is formed below the front main surface 40 with a laterally extending locking edge 41 located therebetween. Further, formed on the front and rear surfaces of the ear 37 are a projection 43f and a recess 43r which can be fitted to each other to connect the metal elements 32, 32 adjacent to each other in the forward and backward directions.

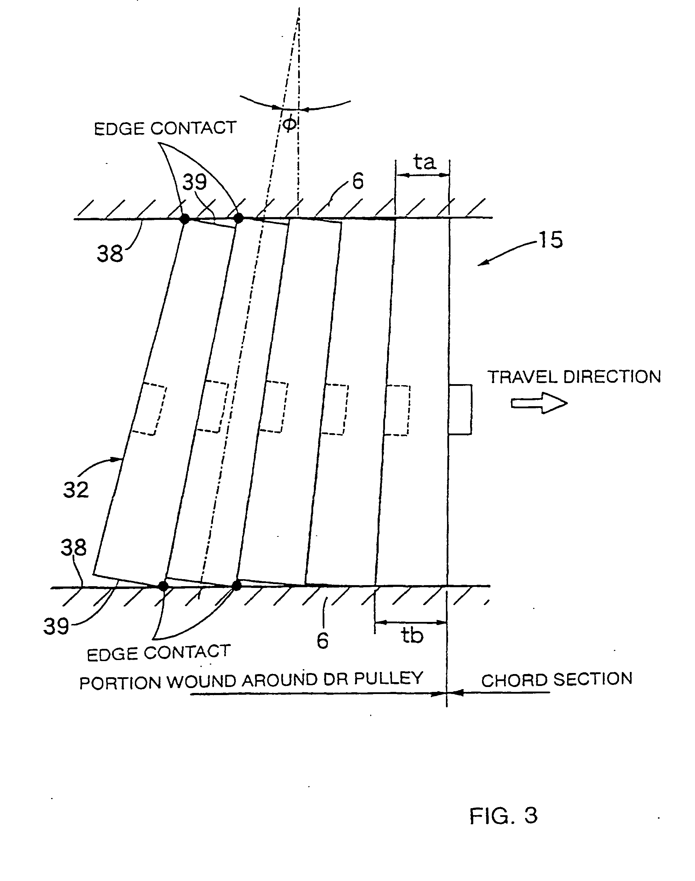

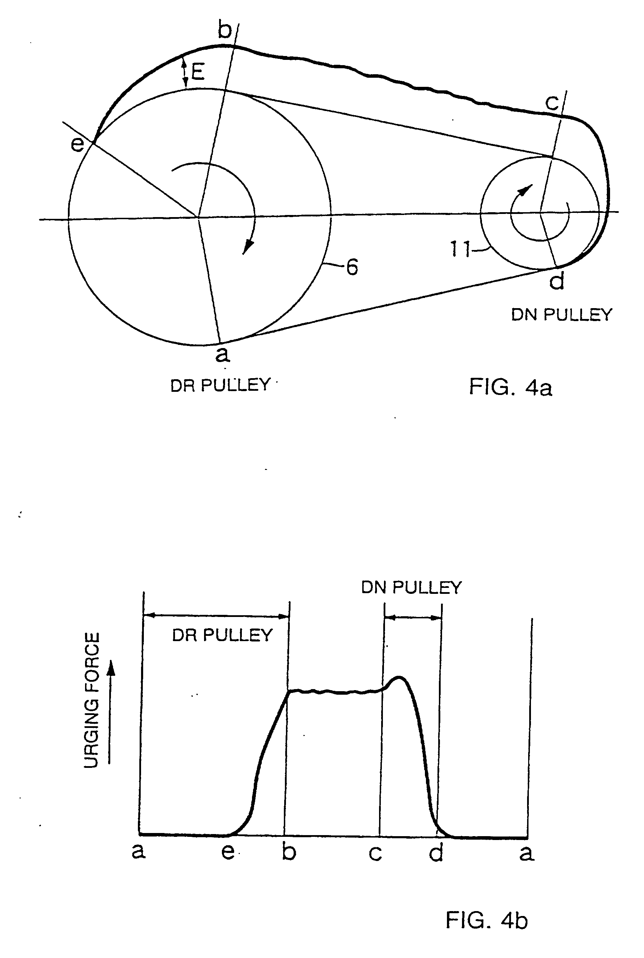

Fig. 3 shows the metal elements 32 in a state immediately before they leave the drive pulley 6, where the thickness ta of the left pulley abutment face 39 is smaller, and the thickness tb of the right pulley abutment face 39 is larger in each of the metal elements 32 constituting the metal belt 15. In a chord section in which the metal element 32 has left the drive pulley 6, the projection 43f and the recess 43r are deeply fitted with each other and hence, no yawing of the metal element 32 is generated. However, in a section in which the metal elements 32 are wound around the pulley, the adjacent metal elements 32 are pitched relative to each other on the locking edge 41 and as a result, the fitting of the projection 43f and the recess 43r with each other becomes shallow. Therefore, if the urging force between the metal elements 32 is strong, the difference in thickness ta and tb between the left and right pulley abutment faces 39, 39 is accumulated to generate a yawing, whereby the pulley abutment faces 39, 39 of the metal elements 32 are brought into edge contact with the V-faces 38, 38 of the drive pulley 6 to cause an abnormal wear in the V-faces 38, 38, resulting in a reduction in durability. Such abnormal wear is generated significantly in the vicinity of the exit of the drive pulley 6, particularly when the change gear ratio of the belt-type continuously variable transmission T is at "TOP". The reason will be described below in reference to Fig. 4.

Fig. 4 shows a distribution of the urging forces between the metal elements 32 of the metal belt 15 in a state in which the effective radius of the drive pulley 6 is larger than that of the driven pulley 11 in a high-speed driving state of the vehicle (i.e. when the change gear ratio is at "TOP"). The urging force E gradually increases in a portion from a point e close to the exit of the drive pulley 6; reaches a maximum value at a point b at the exit; reaches again a maximum value immediately after a point c; and then gradually decreases and assumes zero at a point d at the exit of the driven pulley 11. In this case, the abnormal wear of the V-faces 38, 38 of the pulley is liable to be generated between the point e close to the exit of the drive pulley 6 and the point b, and no significant abnormal wear is generated between a point c and the point d in the drive pulley 11.

The reason is considered to be as follows: The urging force E between the metal elements 32 gradually increases between the point e close to the exit of the drive pulley 6 and the point b and hence, the difference in thickness ta and tb between the left and right pulley abutment faces 39, 39 is accumulated, whereby a large yawing is liable to occur and moreover, the number of the metal elements 32 existing between the points e and b increases because of the increased effective radius of the drive pulley 6, whereby the accumulation of the difference is promoted. On the other hand, in the driven pulley 11, the urging force E between the metal elements 32 increases in a small region immediately after the point c, and then decreases promptly toward the point d and moreover, the number of the metal elements 32 existing in the region where the urging force E increases becomes small immediately after the point c because of the decreased effective radius of the driven pulley 11. The total number of the metal elements 32 of the metal belt 15 in the present embodiment is 430, among which 44 corresponding to 10.23% thereof exist between the points e and b on the drive pulley 6.

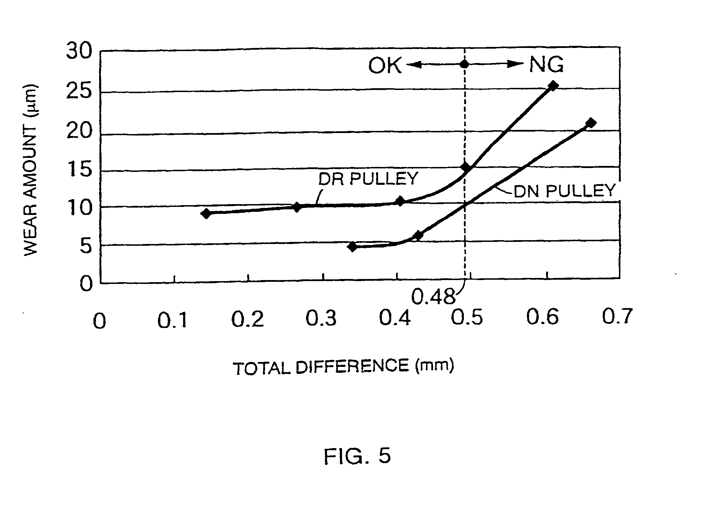

In a graph in Fig. 5, the abscissa indicates the absolute value of a total sum of the differences ta - tb between thicknesses ta and tb respectively of the left and right pulley abutment faces 39, 39 of the 430 metal elements, namely,

$|\sum(ta - tb)|$ and the ordinate indicates the amount of wear of the V-faces 38, 38 of the drive pulley 6. Here, $|\sum(ta - tb)|$ is defined as a total difference. The operational state of the continuously variable transmission T in this case is such that the input rotational speed is 6,000 rpm; the input torque is 165 N•m; the change gear ratio is 0.61; and the operating time is 100 hours. This is equivalent to 30,000 km travel distance of a vehicle.

As apparent from the graph, the amount of wear of the drive pulley 6 is larger than that of the drive pulley 11, and if the total difference in the 430 metal elements 32 exceeds an upper limit value of 0.48 mm, the amount of wear is increased sharply. A state in which the total difference is equal to the upper limit value of 0.48 mm corresponds to a critical state in which the pulley abutment faces 39, 39 of the metal elements 32 are started to be brought into edge contact with the V-faces 38, 38 between the points e and b on the drive pulley 6. Thus, if the total difference is maintained at a value of 0.48 mm or less, the amount of wear of the V-faces 38, 38 of the drive pulley 6 can be suppressed to 15 μm or less to ensure a required durability. To prevent the roughing of the V-faces 38, 38 of the drive pulley 6, it is desirable to suppress the amount of wear of the V-faces 38, 38 to 15 μm or less.

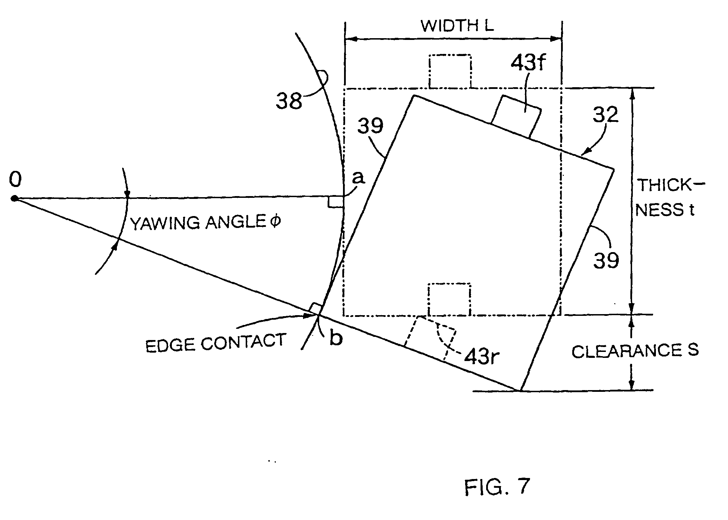

The conditions under which the pulley abutment faces 39, 39 of the metal element 32 are brought into edge contact with the V-faces 38, 38 will be considered below with reference to Figs. 6 and 7. In Fig. 7, the thickness t of the metal element 32 is represented in an emphasized manner.

In the metal element 32 in the present embodiment, a thickness t is 1.5 mm, and a lateral width L at a radially central portion of the pulley abutment face 39, 39 is 23 mm. In the drive pulley 6, an angle θ formed by the V-faces 38, 38 is 0.192 rad, and a winding radius r at central portions of the pulley abutment faces 39, 39 is 65.2 mm.

In Fig. 7, the radius R of the V-faces of the drive pulley 6, against which the pulley abutment faces 39, 38 of the metal element 32 abut, is given according to the following equation:

$$R = r/\sin \theta = 341.8 \text{ (mm)}$$

is given according to the following equation:

$$\varnothing = \{\text{arc's length ab/2} \, \pi \times R\} \times 2 \, \pi$$

However, the radius R of the V-faces is far larger, as compared with the others and hence, the arc's length ab can be replaced by t/2, and hence, φ is given according to the following equation:

$$\phi = \{(t/2)/2 \, \pi \times R\} \times 2 \, \pi$$

$$= t/2R$$

$$= 0.002194 \text{ (rad)}$$

Therefore, it can be seen that a clearance S where the edge contact occurs is given according to the following equation:

$$S = L \times \sin \phi = 0.05 \text{ (mm)}$$

Here, when the total difference $|\sum(ta - tb)|$ in the 430 metal elements 32 is the upper limit value of 0.48 mm, a difference ta - tb in thickness ta and tb between the left and right pulley abutment faces 39, 39 per one metal element 32 is as follows:

$$0.48 + 430 = 0.0011162 \text{ (mm)}$$

Therefore, the accumulation value of the difference ta - tb in the 44 metal elements existing between the point e and b on the drive pulley 6 is as follows:

$$0.0011162 \times 44 = 0.04915 \text{ (mm)}$$

and is smaller than 0.05 mm and hence, it is possible to avoid the occurrence of the edge contact.

Table 1

| Lot No. | Average difference μm | Standard difference μm |
| --- | --- | --- |
| 1 | -4.5 | 1.4 |
| 2 | -0.4 | 0.7 |
| 3 | -1.7 | 1.7 |
| 4 | 0.5 | 0.8 |
| 5 | 3.1 | 1.2 |
| 6 | 2.0 | 0.6 |

The average value of the differences ta - tb and the standard difference in the metal elements for the Lot Nos. 1 to 6 are shown in Table 1. These values can be provided by withdrawing a predetermined number of metal elements from each of the lots and actually measuring the thickness ta and tb of the left and right pulley abutment faces 39, 39.

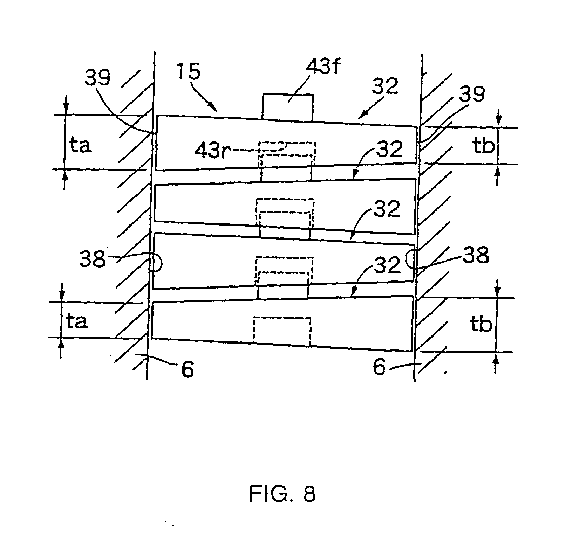

A first lot is selected from those of the lot Nos. 1 to 6 having the negative average values (namely, from the lot Nos.1 to 3), and a second lot is selected from the lots having the positive average values (namely, from the lot Nos. 4 to 6), and an Na number of the metal elements 32 in the first lot and an Nb number of the metal elements 32 in the second lot are combined together, as shown in Fig. 8, whereby the total difference in the (Na + Nb =) 430 elements 32 can be suppressed to the upper limit value of 0.48 mm or less. Thus, the Na number in the first lot and the Nb number in the second lot are determined, so that the following relation is established:

$$|\Delta t1 \times Na + \Delta t2 \times Nb\,| \leq 0.48 \text{ (mm)}$$

wherein $\Delta t1$ represents the average value of the differences ta - tb in the metal elements 32 in the first lot, and $\Delta t2$ represents the average value of the differences ta - tb in the metal elements 32 in the second lot.

For example, when the lot No. 5 with the average value of the differences ta - tb equal to 3.1 μm is selected as the first lot and the lot No. 1 with the average value of the differences ta - tb equal to -4.5 μm is selected as the second lot, if Na = 260 and Nb = 170, the total difference can be suppressed to 0.041 mm ($\leq$0.48 mm). If Na = 250 and Nb = 180, the total difference can be suppressed to 0.035 mm ($\leq$0.48 mm).

When the absolute value of the average value of the differences ta - tb is 1.1 μm as in the lots No. 2 or No. 4, even if the 430 metal elements are selected from such a single lot, the total difference can be suppressed to 0.48 mm or less and hence, two lots of the metal elements 32 need not be combined.

When the Na number of the metal elements 32 in the first lot and the Nb number of the metal elements 32 in the second lot are combined at random to make the total of the 430 metal elements 32, the occurrence of the edge contact can be avoided even if the differences ta - tb in the 44 metal elements 32 existing between the points e and b on the drive pulley 6 are accumulated. However, in the 44 metal elements disposed consecutively, if the ratio of the number of the metal elements 32 from the first lot and the number of the metal elements 32 from the second lot is such that the metal elements from one lot are included excessively much more than those from the other lot, there is a possibility that the edge contact occurs in the portion.

To avoid such an disadvantage to further reliably prevent the edge contact, the 44 metal elements 32 are defined as one group where the ratio of the number of the metal elements 32 from the first lot and the number of the metal elements 32 from the second lot included in such 44 metal elements is set to be equal to the above-mentioned ratio of Na and Nb. Further, a plurality of the groups each comprising the total 44 metal elements 32 are connected in series to constitute a total of 430 metal elements 32, whereby the randomness in the arrangement of the metal elements 32 from the first lot and the metal elements from the second lot can be enhanced to further reliably prevent the edge contact.

In the above way, the metal elements 32 from two lots, whose left and right pulley abutment faces 39, 39 being different in thickness, can be selected at a predetermined ratio and combined at random. This ensures that even if the metal element 32 subjected to a strong urging force in the vicinity of the exit of the drive pulley 6 is yawed, the pulley abutment faces 39, 39 of such metal elements 32 can be prevented from being brought into edge contact with the V-faces 38, 38 of the drive pulley 6. As a result, not only the damage of the V-faces 38, 38 of the drive pulley 6 due to the edge contact can be prevented, but also the metal elements 32 from the lot having a difference in thickness between thicknesses of the left and right pulley abutment faces 39, 39 can be used without waste, leading to a reduction in cost provided by an increase in yield of the metal elements 32.

Although the embodiment of the present invention has been described in detail, various modifications in design may be made without departing from the subject matter of the present invention.

In summary, it is an object of the present invention to ensure that even if metal elements having a difference in thickness between left and right pulley abutment faces, an edge contact does not occur between V-faces of a pulley and the metal elements. A thickness ta, tb of each of left and right pulley abutment faces 39 of a metal element 32 in a belt 15 for a continuously variable transmission is measured; a predetermined number of the metal elements 32 are selected, so that the total sum of the differences in thickness ta, tb between the left and right pulley abutment faces 39 of the predetermined number of the metal elements is in a predetermined range; and the selected metal elements 32 are combined at random and assembled. Even if the metal elements 32 receiving a strong urging force in the vicinity of an exit of a drive pulley 6 are yawed, the pulley abutment faces 39 of such metal elements are not brought into edge contact with V-faces 38 of the drive pulley 6 and prevented from being worn. In addition, it is possible to use the metal elements 32 having a difference in thickness ta, tb between the left and right pulley abutment faces 39, leading to a reduction in cost.

The embodiment of the present invention has been described above in detail. However, various design changes can be made to the present invention without departing from the spirit and scope of the present invention.

## Claims

1. A process for combining metal elements in a belt for a continuously variable transmission, the belt including a metal ring assembly (31) constructed from a plurality of endless metal rings (33) laminated one on another, and a large number of metal elements (32) supported in a laminated state on the metal ring assembly (31), the belt being wound around a drive pulley (6) and a driven pulley (11) to transmit a driving force between both of the pulleys (6 and 11), said process being **characterised by** comprising,

   a step of measuring a thickness (ta, tb) of each of left and right pulley abutment faces (39) of the metal elements (32),
   a step of selecting a predetermined number of the metal elements (32) so that the total sum of differences in thickness (ta, tb) between the left and right pulley abutment faces (39) of said predetermined number of the metal elements (32) is in a predetermined range, and
   a step of combining the selected metal elements (32) at random and assembling them to the metal ring assembly (31).

2. A process for combining metal elements in a belt for a continuously variable transmission according to claim 1, wherein said predetermined number is the number of the metal elements (32) to which an urging force is applied within the drive pulley (6).

3. A process for combining metal elements in a belt for a continuously variable transmission according to claim 1 or 2, wherein said predetermined number corresponds to about 5 to 15%, preferably about 10% of the total number of metal elements (32) of the belt.

4. A belt for a continuously variable transmission, which includes a metal ring assembly (31) constructed from a plurality of endless metal rings (33) laminated one on another, and a large number of metal elements (32) supported in a laminated state on the metal ring assembly (31), and which is wound around a drive pulley (6) and a driven pulley (11) to transmit a driving force between both of the pulleys (6 and 1), **characterised in that**, within a predetermined number of adjacent metal elements (32) which predetermined number is smaller than the total number of metal elements (32) within the belt, the total sum of differences in thickness (ta, tb) between left and right pulley abutment faces (39) of these adjacent metal elements (32) is in a predetermined range, wherein the individual metal elements (32) having a different thickness of this predetermined number of metal elements are distributed at random in longitudinal direction of the belt.

## Patentansprüche

1. Verfahren zum Kombinieren von Metallelementen in einem Riemen für ein stufenlos einstellbares Getriebe, wobei der Riemen eine Metallringanordnung (31), die aus einer Mehrzahl von endlosen, aufeinander geschichteten Metallringen (33) gebildet ist, und eine große Anzahl von Metallelementen (32) umfasst, die auf der Metallringanordnung (31) in einem aus Schichten zusammengesetzten Zustand gelagert sind, wobei der Riemen um eine Antriebsscheibe (6) und eine angetriebene Scheibe (11) gewunden ist, um eine Antriebskraft zwischen den beiden Riemenscheiben (6 und 11) zu übertragen, wobei das Verfahren **dadurch gekennzeichnet ist, dass** es umfasst:

> einen Schritt des Messens einer Dicke (ta, tb) der Metallelemente (32) sowohl an der linken als auch an der rechten Scheibenanlagefläche (39),
> einen Schritt des Wählens einer vorbestimmten Anzahl der Metallelemente (32) derart, dass die Gesamtsumme von Unterschieden zwischen Dicken (ta, tb) an den linken und rechten Scheibenanlageflächen (39) der vorbestimmten Anzahl der Metallelemente (32) in einem vorbestimmten Bereich liegt, und
> einen Schritt des Kombinierens der gewählten Metallelemente (32) per Zufall und des Montierens dieser an der Metallringanordnung (31).

2. Verfahren zum Kombinieren von Metallelementen in einem Riemen für ein stufenlos einstellbares Getriebe nach Anspruch 1, wobei die vorbestimmte Anzahl die Anzahl von Metallelementen (32) ist, auf die eine Schubkraft innerhalb der Antriebsscheibe (6) ausgeübt wird.

3. Verfahren zum Kombinieren von Metallelementen in einem Riemen für ein stufenlos einstellbares Getriebe nach Anspruch 1 oder 2, wobei die vorbestimmte Anzahl ungefähr 5 bis 15%, vorzugsweise ungefähr 10%, der Gesamtzahl von Metallelementen (32) des Riemens entspricht.

4. Riemen für ein stufenlos verstellbares Getriebe umfassend eine Metallringanordnung (31), die aus einer Mehrzahl von endlosen, aufeinander geschichteten Metallringen (33) gebildet ist, und eine große Anzahl von Metallelementen (32), die auf der Metallringanordnung (31) in einem aus Schichten zusammengesetzten Zustand gelagert sind, und der um eine Antriebsscheibe (6) und eine angetriebene Scheibe (11) gewunden ist, um eine Antriebskraft zwischen den beiden Scheiben (6 und 11) zu übertragen, **dadurch gekennzeichnet, dass** innerhalb einer vorbestimmen Anzahl von aneinander angrenzenden Metallelementen (32), deren vorbestimmte Anzahl kleiner ist als die Gesamtzahl von Metallelementen (32) innerhalb des Riemens, die Gesamtsumme des Unterschieds zwischen Dicken (ta, tb) an den linken und rechten Scheibenanlageflächen (39) dieser aneinander angrenzenden Metallelemente (32) in einem vorbestimmten Bereich liegt, wobei die einzelnen Metallelemente (32), die eine zu der vorbestimmten Anzahl von Metallelementen unterschiedliche Dicke haben, in Längsrichtung des Riemens zufällig verteilt sind.

## Revendications

1. Procédé de combinaison d'éléments métalliques dans une courroie destinée à une transmission à variation continue, la courroie comprenant un ensemble annulaire métallique (31) construit à partir d'une pluralité d'anneaux métalliques sans fin (33) en stratification les uns sur les autres, et un grand nombre d'éléments métalliques (32) supportés dans un état de stratification par l'ensemble annulaire métallique (31), la courroie étant enroulée autour d'une poulie d'entraînement (6) et d'une poulie menée (11) afin de transmettre une force d'entraînement entre les deux poulies (6 et 11), ledit procédé étant **caractérisé en ce qu'**il comprend :

> une étape de mesure d'une épaisseur (ta, tb) de chacune des faces de butée de poulie gauche et droite (39) des éléments métalliques (32) ;
> une étape de sélection d'un nombre prédéterminé d'éléments métalliques (32), de sorte que la somme totale de différences d'épaisseur (ta, tb) entre les faces de butée de poulie gauche et droite (39) dudit nombre prédéterminé d'éléments métalliques (32) se situe dans une plage prédéterminée ; et
> une étape de combinaison des éléments métalliques sélectionnés (32) de manière aléatoire et d'assemblage de ceux-ci sur l'ensemble annulaire métallique (31).

2. Procédé de combinaison d'éléments métalliques dans une courroie destinée à une transmission à variation continue selon la revendication 1, dans lequel ledit nombre prédéterminé est le nombre d'éléments métalliques (32) sur lesquels s'applique une force de poussée à l'intérieur de la poulie d'entraînement (6).

3. Procédé de combinaison d'éléments métalliques dans une courroie destinée à une transmission à variation continue selon la revendication 1 ou la revendication 2, dans lequel ledit nombre prédéterminé correspond à environ 5 à 15 %, de préférence à environ 10 %, du nombre total d'éléments métalliques (32) de la courroie.

4. Courroie pour transmission à variation continue, qui comprend un ensemble annulaire métallique (31) construit à partir d'une pluralité d'anneaux métalliques sans fin (33) en stratification les uns sur les autres, et un grand nombre d'éléments métalliques (32) supportés dans un état de stratification par l'ensemble annulaire métallique (31), et qui est enroulée autour d'une poulie d'entraînement (6) et d'une poulie menée (11) afin de transmettre une force d'entraînement entre les deux poulies (6 et 11), **caractérisée en ce que**, dans un nombre prédéterminé d'éléments métalliques adjacents (32) dont le nombre prédéterminé est plus petit que le nombre total d'éléments métalliques (32) de la courroie, la somme totale de différences d'épaisseur (ta, tb) entre des faces de butée de poulie gauche et droite (39) de ces éléments métalliques adjacents (32) se situe dans une plage prédéterminée, dans laquelle les éléments métalliques individuels (32) ayant une épaisseur différente de ce nombre prédéterminé d'éléments métalliques sont répartis de manière aléatoire dans la direction longitudinale de la courroie.

FIG. 1

HYDRAULIC PRESSURE CONTROL UNIT — U2

ELECTRONIC CONTROL UNIT — U1

UPWARDS

REARWARDS

RIGHTWARDS ← → LEFTWARDS

FORWARDS

DOWNWARDS

FIG. 2

15

TRAVEL DIRECTION

31

31    37   43f

33

45

40    3

33

44   35   41   42   36   35

34

39

32

EP 1 138 976 B1

EDGE CONTACT

39

38

6

ta

15

32

38

39

TRAVEL DIRECTION

EDGE CONTACT

6

tb

PORTION WOUND AROUND DR PULLEY

CHORD SECTION

FIG. 3

12

FIG. 4a

FIG. 4b

FIG. 5

FIG. 6

FIG. 7

FIG. 8